# EUROPEAN PATENT APPLICATION

(11) **EP 4 651 413 A1**
(43) Date of publication of application: **19.11.2025**
(21) Application number: 25173081.8
(22) Date of filing: 29.04.2025
(51) Int. Cl.: H04L 1/1822, H04L 1/1829, H04L 1/1867

(54) **USER EQUIPMENT CONFIGURED TO PERFORM WIRELESS COMMUNICATION WITH BASE STATION AND OPERATING METHOD OF USER EQUIPMENT**

(30) Priority: 14.05.2024 KR 20240063399; 27.08.2024 KR 20240115163
(71) Applicant: Samsung Electronics Co., Ltd., Suwon-si, Gyeonggi-do 16677 (KR)
(72) Inventor: BAE, Jimin, 16677 Suwon-si (KR); PARK, Jungmin, 16677 Suwon-si (KR)
(74) Representative: Marks & Clerk LLP

(57) **Abstract**

An operating method of a user equipment for performing wireless communication with a base station includes receiving, from the base station, band combination (BC) information including at least one frequency band and at least one carrier component (CC) corresponding to the at least one frequency band, generating capability information, based on the BC information and maximum numbers of Hybrid Automatic Repeat reQuest (HARQ) processes supported by the user equipment for the at least one CC, transmitting, to the base station, the capability information, receiving, from the base station, an allocated number of HARQ processes allocated to the user equipment for each CC of the at least one CC, based on the capability information, and performing a HARQ operation, based on the allocated number of HARQ processes.

## Description

### BACKGROUND

### 1. Field

The present disclosure relates generally to wireless communications, and more particularly, to user equipment configured to perform Hybrid Automatic Repeat reQuest (HARQ) operations and an operating method of the user equipment.

### 2. Description of Related Art

A Hybrid Automatic Repeat reQuest (HARQ) may refer to a transmission method that may attempt to address a time delay problem of an upper layer by adding channel coding for utilizing error packets to an existing Automatic Repeat reQuest (ARQ) scheme, and may be used in various mobile communication standards, such as, but not limited to, highspeed packet access (HSPA), long-term evolution (LTE), or the like. A data channel may be repeatedly transmitted according to the HARQ, and HARQ combining may be performed on the data channel that may be repeatedly transmitted.

In various mobile communication standards, when a signal is repeatedly transmitted according to the HARQ, a maximum number of HARQ processes may be defined as 16, for example. However, to increase a coverage of an uplink, it may be necessary to increase the maximum number of HARQ processes to 16 or more. However, when the maximum number of HARQ processes is increased to 16 or more, a complexity problem of a user equipment (e.g., an increase in the size of hardware) may occur. Thus, there exists a need for further improvements in mobile communication technology, as the need for increasing the maximum number of HARQ processes may be constrained by increases in the complexity of the user equipment. Improvements are presented herein. These improvements may also be applicable to other wireless communication technologies and the telecommunication standards that employ these technologies.

### SUMMARY

One or more example embodiments of the present disclosure provide user equipment, which may increase a maximum number of Hybrid Automatic Repeat reQuest (HARQ) processes while potentially reducing a complexity problem of the user equipment, and an operating method of the user equipment.

According to an aspect of the present disclosure, an operating method of a user equipment for performing wireless communication with a base station includes receiving, from the base station, band combination (BC) information including at least one frequency band and at least one carrier component (CC) corresponding to the at least one frequency band, generating capability information, based on the BC information and maximum numbers of Hybrid Automatic Repeat reQuest (HARQ) processes supported by the user equipment for the at least one CC, transmitting, to the base station, the capability information, receiving, from the base station, an allocated number of HARQ processes allocated to the user equipment for each CC of the at least one CC, based on the capability information, and performing a HARQ operation, based on the allocated number of HARQ processes.

According to an aspect of the present disclosure, an operating method of a user equipment for performing wireless communication with a base station includes receiving, from the base station, BC information including at least one frequency band and at least one CC corresponding to the at least one frequency band, calculating a weight corresponding to each CC of the at least one CC, generating capability information, based on the BC information, the weight corresponding to each CC of the at least one CC, and a sum of maximum numbers of HARQ processes supported by the user equipment for the at least one CC, transmitting, to the base station, the capability information, receiving, from the base station, an allocated number of HARQ processes allocated to the user equipment for each CC of the at least one CC, based on the capability information, and performing an HARQ operation, based on the allocated number of HARQ processes.

According to an aspect of the present disclosure, a user equipment configured to perform wireless communication with a base station includes a plurality of antennas, one or more communication processors including processing circuitry, and a memory storing instructions. The instructions, when executed by the one or more communication processors individually or collectively, cause the user equipment to receive, from the base station, BC information including at least one frequency band and at least one CC corresponding to the at least one frequency band, generate capability information, based on the BC information and maximum numbers of HARQ processes supported by the user equipment for the at least one CC, and perform a HARQ operation, based on allocated numbers of HARQ processes for each CC of the at least one CC, the allocated numbers of HARQ processes being allocated by the user equipment based on the capability information.

According to a further aspect, there is provided an operating method of a user equipment for performing wireless communication with a base station, the operating method comprising: receiving, from the base station, band combination (BC) information comprising at least one frequency band and at least one carrier component (CC) corresponding to the at least one frequency band; generating capability information, based on the BC information and maximum numbers of Hybrid Automatic Repeat reQuest (HARQ) processes supported by the user equipment for the at least one CC; transmitting, to the base station, the capability information; receiving, from the base station, an allocated number of HARQ processes allocated to the user equipment for each CC of the at least one CC; and performing a HARQ operation, based on the allocated number of HARQ processes.

According to the further aspect, there is also provided a user equipment configured to perform wireless communication with a base station, the user equipment comprising: a plurality of antennas; one or more communication processors comprising processing circuitry; and a memory storing instructions, wherein the instructions, when executed by the one or more communication processors individually or collectively, cause the user equipment to: receive, from the base station, band combination (BC) information comprising at least one frequency band and at least one carrier component (CC) corresponding to the at least one frequency band; generate capability information, based on the BC information and maximum numbers of Hybrid Automatic Repeat reQuest (HARQ) processes supported by the user equipment for the at least one CC; transmit the capability information to the base station; and receiving, from the base station, an allocated number of HARQ processes allocated to the user equipment for each CC of the at least one CC; and performing a HARQ operation, based on the allocated number of HARQ processes.

This operating method of the further aspect and the user equipment of the further aspect may each be combined with the subject-matter of relevant ones of the dependent claims.

The following features may apply to any of the above described aspects.

In some embodiments, the carrier components (CC) may also be referred to as component carriers (CC).

In some embodiments, the maximum numbers of HARQ processes supported by the user equipment may be the maximum number of HARQ processes supported by the user equipment per CC. In some embodiments, the user equipment may calculate a weight per CC, the user equipment may calculate the weight per CC, based on BC information. The calculation of the weight per CC may comprise for each CC, setting a weight based on an amount of storage space required for the respective CC. The amount of storage space required for each CC may depend upon the frequency band to which the CC corresponds. For example, one or more CCs corresponding to a first frequency band may each require a first amount of storage space, whereas one or more CCs corresponding to a second frequency band may each require a second amount of storage space. The first amount of storage space may be greater than the second amount of storage space, and so the user equipment may set the weight for each of the one or more CCs corresponding to a second frequency band to one, and may set the weight for each of the one or more CCs corresponding to the first frequency band to a number given by a ratio of the first amount of storage space to the second amount of storage space.

In some embodiments, the user equipment may calculate the sum Z of the maximum number of HARQ processes supported by the user equipment. The user equipment may calculate the sum Z for a frequency band based on: the maximum number of HARQ processes supported by the user equipment for that frequency band; the number of CCs corresponding to the frequency band; and the maximum number of HARQ processes corresponding to each CC. More specifically, the user equipment may calculate the sum Z as being a maximum of: the maximum number of HARQ processes supported by the user equipment for that frequency band; and the number of CCs corresponding to the frequency band multiplied by the maximum number of HARQ processes corresponding to each CC.

The step of receiving from the base station, the allocated number of HARQ processes is performed after transmitting, to the base station, the capability information.

Additional aspects may be set forth in part in the description which follows and, in part, may be apparent from the description, and/or may be learned by practice of the presented embodiments.

At least some of the above and other features of the invention are set out in the claims.

### BRIEF DESCRIPTION OF THE DRAWINGS

The above and other aspects, features, and advantages of certain embodiments of the present disclosure may be more apparent from the following description taken in conjunction with the accompanying drawings, in which:
FIG. 1 is a block diagram of a wireless communication system, according to an embodiment;
FIG. 2 is a flowchart of an operating method of a user equipment, according to an embodiment;
FIG. 3 is a flowchart of an operating method of a user equipment, according to an embodiment;
FIG. 4 is a flowchart of an operating of generating capability information of a user equipment, according to an embodiment;
FIG. 5 is a flowchart of an operating method of a user equipment, according to an embodiment;
FIG. 6 is a flowchart of an operating method of a user equipment, according to an embodiment;
FIG. 7 is a block diagram of a user equipment, according to an embodiment;
FIG. 8 is a block diagram of a user equipment, according to an embodiment;
FIG. 9 is a block diagram of a virtual memory, according to an embodiment;
FIG. 10 is a block diagram of a virtual memory, according to an embodiment;
FIG. 11 is a block diagram of an electronic device, according to an embodiment; and
FIG. 12 is a conceptual diagram of an Internet of Things (IoT) network system, according to an embodiment.

### DETAILED DESCRIPTION OF THE EMBODIMENTS

The following description with reference to the accompanying drawings is provided to assist in a comprehensive understanding of embodiments of the present disclosure defined by the claims and their equivalents. Various specific details are included to assist in understanding, but these details are considered to be examples only. Therefore, those of ordinary skill in the art may recognize that various changes and modifications of the embodiments described herein may be made without departing from the scope of the disclosure. In addition, descriptions of well-known functions and structures are omitted for clarity and conciseness.

With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wired), wirelessly, or via a third element.

Reference throughout the present disclosure to "one embodiment," "an embodiment," "an example embodiment," or similar language may indicate that a particular feature, structure, or characteristic described in connection with the indicated embodiment is included in at least one embodiment of the present solution. Thus, the phrases "in one embodiment", "in an embodiment," "in an example embodiment," and similar language throughout this disclosure may, but do not necessarily, all refer to the same embodiment. The embodiments described herein are example embodiments, and thus, the disclosure is not limited thereto and may be realized in various other forms.

It is to be understood that the specific order or hierarchy of blocks in the processes/flowcharts disclosed are an illustration of example approaches. Based upon design preferences, it is understood that the specific order or hierarchy of blocks in the processes/flowcharts may be rearranged. Further, some blocks may be combined or omitted. The accompanying claims present elements of the various blocks in a sample order, and are not meant to be limited to the specific order or hierarchy presented.

The embodiments herein may be described and illustrated in terms of blocks, as shown in the drawings, which carry out a described function or functions. These blocks, which may be referred to herein as units or modules or the like, or by names such as device, logic, circuit, controller, counter, comparator, generator, converter, or the like, may be physically implemented by analog and/or digital circuits including one or more of a logic gate, an integrated circuit, a microprocessor, a microcontroller, a memory circuit, a passive electronic component, an active electronic component, an optical component, and the like.

In the present disclosure, the articles "a" and "an" are intended to include one or more items, and may be used interchangeably with "one or more." Where only one item is intended, the term "one" or similar language is used. For example, the term "a processor" may refer to either a single processor or multiple processors. When a processor is described as carrying out an operation and the processor is referred to perform an additional operation, the multiple operations may be executed by either a single processor or any one or a combination of multiple processors.

Hereinafter, embodiments are described based on a new-radio (NR) network-based wireless communication system (WCS) (e.g., Third Generation Partnership Project (3GPP)), however, the present disclosure is not limited to an NR network. For example, the present disclosure may be applied to other wireless communication systems with similar technical backgrounds and/or channel settings (e.g., cellular communication systems, such as, but not limited to, long-term evolution (LTE), LTE-advanced (LTE-A), wireless broadband (WiBro), Global System for Mobile Communication (GSM), Code Division Multiple Access (CDMA), advanced communications (e.g., sixth generation (6G)), near-field communication (NFC) systems, such as, but not limited to, Bluetooth^{™}, Bluetooth Low Energy (BLE), or NFC), or the like.

In addition, various functions described below may be implemented and/or supported by artificial intelligence (AI) technology and/or at least one computer program. Each of the at least one computer program may be and/or may include computer-readable program code and may be executed on a computer-readable medium. The terms "application" and "program" may refer to at least one computer program, software components, instruction sets, procedures, functions, objects, classes, instances, associated data, or a portion thereof adapted for implementation in suitable computer-readable program code. The term "computer-readable program code" may refer to all types of computer code, which may include source code, object code, and/or executable code. The term "computer-readable medium" may refer to all types of media that may be accessed by a computer, for example, read-only memory (ROM), random access memory (RAM), a hard disk drive (HDD), a compact disk (CD), a digital video disk (DVD), or any other type of memory. A "non-transitory" computer-readable medium may exclude wired, wireless, optical, or other communication links that transmit transient electrical or other signals. The non-transitory computer-readable medium may include a medium on which data may be permanently stored and a medium on which data may be stored and overwritten later, such as, but not limited to, a rewritable optical disk or an erasable memory device.

In embodiments described below, a hardware approach method is described as an example. However, embodiments include a technique using both hardware and software, and thus, the embodiments may not exclude a software approach method.

Hereinafter, various embodiments of the present disclosure are described with reference to the accompanying drawings.

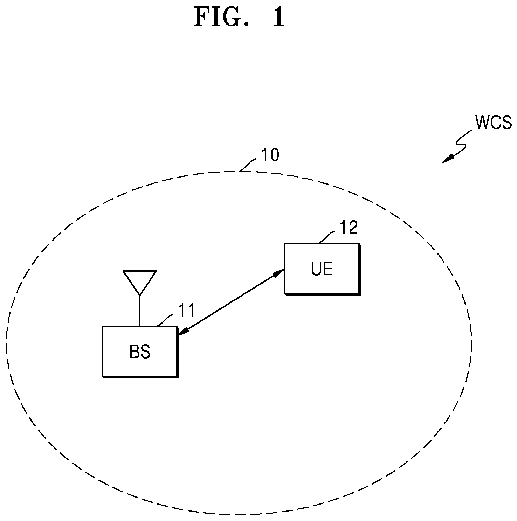

FIG. 1 is a block diagram of a wireless communication system WCS, according to an embodiment.

Referring to FIG. 1, the wireless communication system WCS may include a base station (BS) 11 and a user equipment (UE) 12. The base station 11 may generally refer to a fixed station, which may communicate with the user equipment 12 and/or another base station. Alternatively or additionally, the base station 11 may refer to a mobile satellite (e.g., a geostationary orbit (GEO) satellite, a low earth orbit (LEO) satellite, or the like) that may communicate with the user equipment 12 and/or another base station. For example, the base station 11 may support a non-terrestrial network and/or may support a terrestrial network.

The base station 11 may communicate with the user equipment 12 and/or the other base station and may exchange data and/or control information with the user equipment 12 and/or the other base station. For example, the base station 11 may be referred to as a cell, a Node B, an evolved-Node B (eNB), a next generation Node B (gNB), a sector, a site, a base transceiver system (BTS), an access point (AP), a relay node, a remote radio head (RRH), a radio unit (RU), a transmit reception point (TRP), a small cell, a device, or the like. The base station 11 may provide wireless broadband access to the user equipment 12 within a coverage area 10 of the base station 11.

The user equipment 12 may be fixed and/or mobile, and refer to any device that may transmit and/or receive data and/or control information to and/or from the base station 11 by communicating with the base station 11. For example, the user equipment 12 may be referred to as a terminal, a terminal equipment, a mobile station (MS), a mobile terminal (MT), a user terminal (UT), a subscribe station (SS), a wireless communication device, a wireless device, and/or a handheld device. Although only the user equipment 12 is illustrated herein, the present disclosure is not limited thereto. For example, the wireless communication system WCS may further include other user equipment in addition to the user equipment 12. That is, the user equipment 12 depicted in FIG. 1 may represent a single device (and/or user) and/or may represent a plurality of devices (and/or users).

The user equipment 12 may perform a Hybrid Automatic Repeat reQuest (HARQ) operation. The HARQ operation may refer to an operation in which the user equipment 12 may transmit an acknowledgement (ACK) and/or a negative acknowledgement (NACK) to the base station 11 through an allocated HARQ process. For example, the user equipment 12 may be allocated at least one HARQ processes per carrier component (CC) (and/or per frequency band) from the base station 11, decode data received from the base station 11, and transmit ACK/NACK to the base station 11 through the allocated HARQ process. A maximum number of allocated HARQ processes per CC may need to increase due to several factors. For example, the factors may include, but not be limited to, increasing a round trip time (RRT), which may refer to a time between data being transmitted and the data being received, and measures (e.g., NR-carrier aggregation operation) to improve a coverage of a downlink.

However, an increase in the maximum number of allocated HARQ processes per CC may cause an increase in the complexity of the user equipment 12 (e.g., additional memory may be needed). For example, when the maximum number of allocated HARQ processes per CC increases, the user equipment 12 may need additional memory capable of at least one of a log-likelihood ratio (LLR) for incremental redundancy (IR) combining retransmission data received per HARQ process, data successfully decoded before the received data, and cyclic redundancy check (CRC) information before the received data for a code block (CB) per HARQ process. As another example, when the user equipment 12 does not detect from which CC an increased maximum number of HARQ processes are to be allocated, the maximum number of HARQ processes for all CCs may be assumed to be the increased maximum number of HARQ processes. Thus, the memory space needed when the maximum number of allocated HARQ processes per CC is 32 may be twice the memory space needed when the maximum number of allocated HARQ processes per CC is 16. Thus, when the complexity of the user equipment 12 increases, the production costs of the user equipment 12 may increase accordingly.

To address the problem of increasing complexity of the user equipment 12, the wireless communication system WCS, according to the present disclosure, may generate capability information, based on band combination (BC) information including at least one frequency band and at least one CC corresponding to the at least one frequency band and the maximum number of HARQ processes supported by the user equipment 12, allocate the number of HARQ processes per CC to the user equipment 12, based on the capability information, and perform an HARQ operation, based on the number of HARQ processes per CC. Because the wireless communication system WCS may allocate the number of HARQ processes per CC to the user equipment 12, based on the capability information, the user equipment 12 may detect from which CC the increased maximum number of HARQ processes are to be allocated. Accordingly, at least one of the numbers of HARQ processes per CC may exceed 16 without increasing a size of a memory included in the user equipment 12. Consequently, the maximum number of HARQ processes per CC may be increased without increasing the complexity of the user equipment 12.

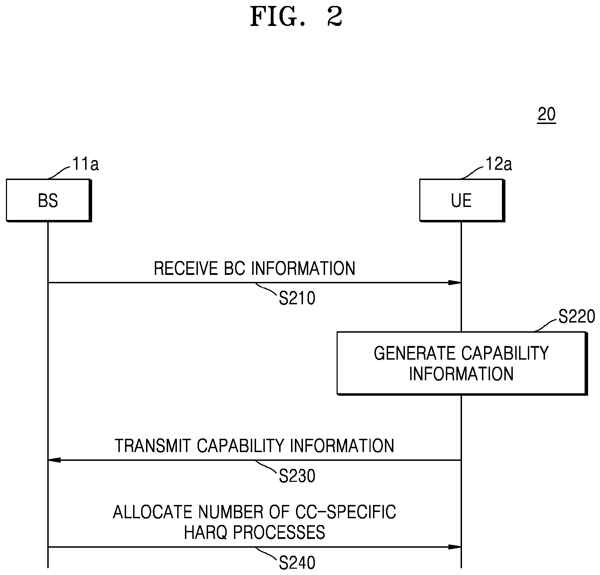

Various embodiments in which the wireless communication system WCS generates capability information and allocates the number of HARQ processes per CC, based on the generated capability information, are described with reference to FIGS. 2 to 12.

FIG. 2 is a flowchart of an operating method 20 of a user equipment 12a, according to an embodiment.

Referring to FIG. 2, the operating method 20 of the user equipment 12a may include a plurality of operations S210 to S240 The base station 11a and the user equipment 12a of FIG. 2 may include and/or may be similar in many respects to the base station 11 and the user equipment 12, respectively, that are described with reference to FIG. 1, and may include additional features not mentioned above. Consequently, repeated descriptions of the base station 11a and the user equipment 12a described with reference to FIG. 1 may be omitted for the sake of brevity.

In operation S210, the user equipment 12a may receive BC information from the base station 11a. The BC information may include at least one frequency band and at least one CC corresponding to at least one frequency band. For example, the BC information may include a first frequency band of FR1 and one CC corresponding to the first frequency band, include a second frequency band of FR1 and two CCs corresponding to the second frequency band, and include a third frequency band, a fourth frequency band, and a fifth frequency band of FR1 and three CCs corresponding to each of the third frequency band, the fourth frequency band, and the fifth frequency band. The BC information may include a sixth frequency band of FR2 and eight CCs corresponding to the sixth frequency band. FR1 and FR2 may each refer to a range of a frequency band. For example, FR1 may include a band of about 410MHz to about 7125MHz, and FR2 may include a band of about 24250MHz to about 52600MHz.

In operation S220, the user equipment 12a may generate capability information, based on the received BC information. In some embodiments, the user equipment 12a may generate capability information, based on the BC information and a maximum number of HARQ processes supported by the user equipment 12a.

For example, the user equipment 12a may generate capability information by integrating maximum numbers of HARQ processes that the user equipment 12a may support for frequency bands and CCs included in the BC information. The capability information may include at least one of the sum of the maximum numbers of HARQ processes that may be supported by the user equipment 12a, a ratio of the sum of the maximum numbers of HARQ processes that may be supported by the user equipment 12a to the sum of maximum numbers of HARQ processes corresponding to the BC information, a weight per CC corresponding to the BC information, and a maximum number of HARQ processes per CC that may be supported by the user equipment 12a.

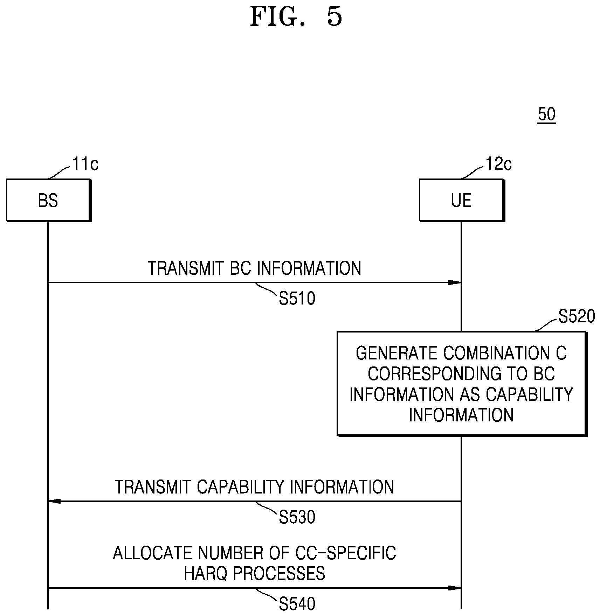

For example, the user equipment 12a may generate, as capability information, combinations of maximum numbers of CCs that the user equipment 12a may support for frequency bands included in the BC information and maximum numbers of HARQ processes for the CCs. An embodiment in which the combinations are generated as the capability information is described with reference to FIG. 5.

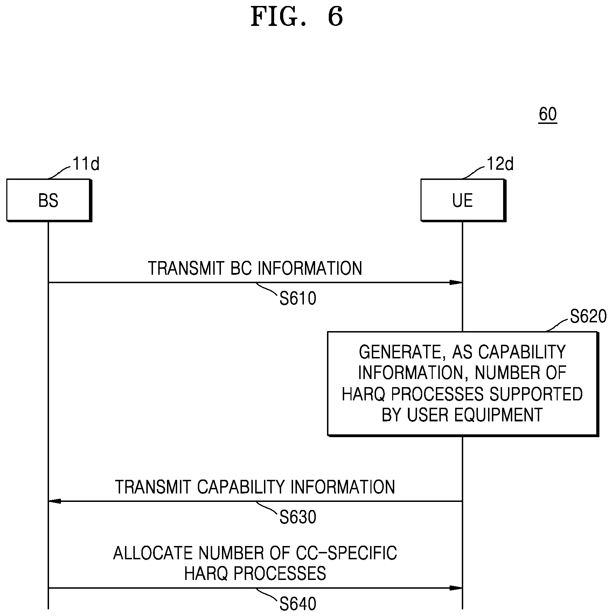

For example, the user equipment 12a may generate, as capability information, the number of HARQ processes per CC that the user equipment 12a may support for the frequency band included in the BC information. An embodiment in which the number of HARQ processes per CC is generated as the capability information is described with reference to FIG. 6.

In operation S230, the user equipment 12a may transmit capability information to the base station 11a. In operation S240, the user equipment 12a may be allocated the number of HARQ processes per CC from the base station 11a. In some embodiments, the base station 11a may allocate the number of HARQ processes per CC to the user equipment 12a, based on the transmitted BC information and the received capability information. For example, the base station 11a may allocate the number of HARQ processes per CC to the user equipment 12a with a range of the received capability information. When at least one of the numbers of HARQ processes per CC increases to 32, additional memory may not be needed when the number of HARQ processes per CC is allocated within the range of the received capability information. Accordingly, a maximum number of HARQ processes per CC may be increased without increasing the complexity of the user equipment 12a.

In some embodiments, the user equipment 12a may perform an HARQ operation, based on the number of allocated HARQ processes per CC, and at least one of numbers of allocated HARQ processes per CC may be more than 16. For example, at least one of the numbers of allocated HARQ processes per CC may be 32.

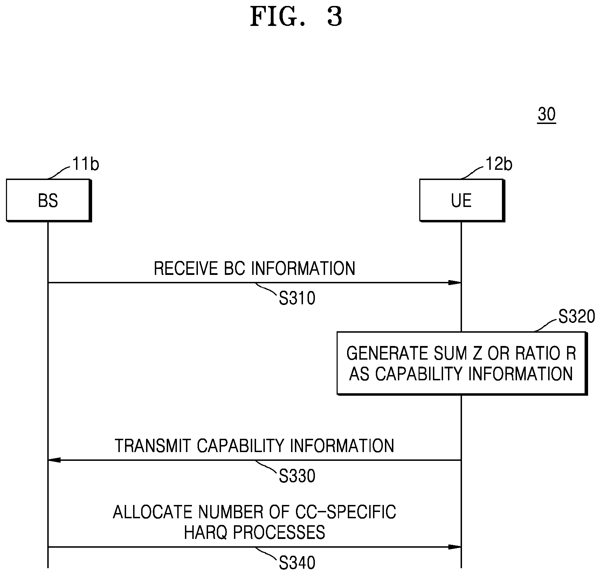

FIG. 3 is a flowchart of an operating method of a user equipment 12b, according to an embodiment.

Referring to FIG. 3, an operating method 30 of the user equipment 12b may include a plurality of operations S310 to S340. The base station 11b and the user equipment 12b of FIG. 3 may include and/or may be similar in many respects to the base stations 11 and 11a and the user equipment 12 and 12a, respectively, that are described with reference to FIGS. 1 and 2, and may include additional features not mentioned above. Furthermore, operation S310 of FIG. 3 may include and/or may be similar in many respects to the operation S210 described with reference to FIG. 2. Consequently, repeated descriptions of the base station 11b, the user equipment 12b, and operation S310 described with reference to FIGS. 1 and 2 may be omitted for the sake of brevity.

In operation S320, the user equipment 12b may generate a sum Z and/or a ratio R as capability information, based on received BC information and a maximum number of HARQ processes supported by the user equipment 12b. In some embodiments, the user equipment 12b may generate the sum Z as capability information by integrating maximum numbers of HARQ processes that the user equipment 12b may support for frequency bands and CCs that are included in the BC information. As used herein, the sum Z may refer to the sum of the maximum numbers of HARQ processes that the user equipment 12b may support for the frequency bands and the CCs that are included in the BC information. The sum Z may be limited according to the sum of HARQ processes that is needed.

For example, the BC information may include a first frequency band of FR1 and one CC corresponding to the first frequency band, and the sum Z of the maximum numbers of HARQ processes supported by the user equipment 12b may be 48, based on the first frequency band of FR1. When the maximum number of HARQ processes corresponding to one CC is 32, the number of CCs included in the BC information is one (1), the sum of numbers of HARQ processes needed may be 32. Accordingly, the sum Z may be limited to 32, and the user equipment 12b may generate the sum Z as capability information. However, the present disclosure is not limited in this regard, and the maximum number of HARQ processes may be values other than the values disclosed above.

For example, the BC information may include the first frequency band of FR1 and two CCs corresponding to the first frequency band, and the sum of the maximum numbers of HARQ processes supported by the user equipment 12b may be 48 based on the first frequency band of FR1. When the maximum number of HARQ processes corresponding to one CC is 32, the number of CCs included in the BC information is two (2), the sum of numbers of HARQ process needed may be 64. Thus, because the sum of the maximum numbers of HARQ processes supported by the user equipment 12b is less than the sum of the numbers of HARQ processes needed, the sum Z may be 48, and the user equipment 12b may generate the sum Z as capability information.

In some embodiments, the user equipment 12b may generate the ratio R as capability information by integrating the maximum numbers of HARQ processes that the user equipment 12b may support for frequency bands and CCs included in the BC information. As used herein, the ratio R may refer to a ratio of the sum of the maximum numbers of HARQ processes that the user equipment 12b may support for the frequency bands and the CCs included in the BC information to the sum of the numbers of HARQ processes needed. The sum of the number of HARQ processes needed for a frequency band may be equal to a sum of the maximum number of HARQ processes corresponding to each CC corresponding to the frequency band. The ratio R may have a value of one (1) or less.

For example, the BC information may include the first frequency band of FR1 and one CC corresponding to the first frequency band, and the sum of the maximum numbers of HARQ processes supported by the user equipment 12b may be 48, based on the first frequency band of FR1. When the maximum number of HARQ processes corresponding to one CC is 32, because the number of CCs included in the BC information is one (1), the sum of numbers of HARQ processes needed may be 32. Accordingly, a ratio of the sum of the maximum numbers of HARQ processes that the user equipment 12b may support for the frequency bands and the CCs included in the BC information to the sum of the numbers of HARQ processes needed may be 48/32, which is greater than one (1). Thus, a ratio R may be one (1), and the user equipment 12b may generate the ratio R as capability information.

As another example, the BC information may include the first frequency band of FR1 and two CCs corresponding to the first frequency band, and the sum of the maximum numbers of HARQ processes supported by the user equipment 12b may be 48, based on the first frequency band of FR1. When the maximum number of HARQ processes corresponding to one CC is 32, because the number of CCs included in the BC information is two (2), the sum of numbers of HARQ processes needed may be 64. Accordingly, a ratio of the sum of the maximum numbers of HARQ processes that the user equipment 12b may support for the frequency bands and the CCs included in the BC information to the sum of the numbers of HARQ processes needed may be 48/64. Thus, the ratio R may be 0.75, and the user equipment 12b may generate the ratio R as capability information.

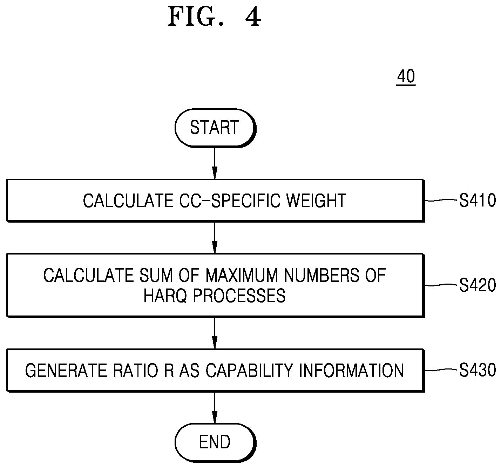

In some embodiments, the user equipment 12b may generate the ratio R and a weight per CC as capability information by integrating the maximum numbers of HARQ processes that the user equipment 12b may support for frequency bands and CCs included in the BC information. An embodiment in which the capability information is generated based on the weight per CC is described with reference to FIG. 4.

In some embodiments, when the user equipment 12b generates the sum Z or the ratio R as the capability information, at least one of the maximum numbers of HARQ processes that may be supported by the user equipment 12b may be less than 16. However, the present disclosure is not limited thereto. For example, when the user equipment 12b generates the sum Z or the ratio R as the capability information, each of the maximum numbers of HARQ processes that may be supported by the user equipment 12b may be 16 or more.

In operation S330, the user equipment 12b may transmit the capability information to the base station 11b. In operation S340, the user equipment 12b may be allocated the number of HARQ processes per CC from the base station 11b. In some embodiments, the base station 11b may allocate the number of HARQ processes per CC to the user equipment 12b, based on the transmitted BC information and the received capability information.

For example, the BC information may include the first frequency band of FR1 and one CC corresponding to the first frequency band. When the sum Z is 32 or when the ratio R is one (1), the base station 11b may allocate the number of HARQ processes for one CC corresponding to a the first frequency band to 32.

For example, the BC information may include the first frequency band of FR1 and two CCs corresponding to the first frequency band. When the sum Z is 48 or the ratio R is 0.75, the base station 11b may allocate the number of HARQ processes of a first CC, from among two CCs corresponding to the first frequency band, to 32 and allocate the number of HARQ processes of a second CC, from among the two CCs corresponding to the first frequency band, to 16.

The base station 11b may allocate the number of HARQ processes per CC to the user equipment 12b in a range of the sum Z or the ratio R. When at least one of the numbers of HARQ processes per CC increases to 32, since the number of HARQ processes per CC is allocated in a range of the sum Z or ratio R received, additional memory may not be needed. Accordingly, a maximum number of HARQ processes per CC may be increased without increasing the complexity of the user equipment 12b.

In some embodiments, the user equipment 12b may perform an HARQ operation, based on the number of allocated HARQ process per CC.

FIG. 4 is a flowchart of an operating method 40 of generating capability information of a user equipment, according to an embodiment.

Referring to FIG. 4, the operating method 40 of generating capability information of the user equipment may include a plurality of operations S410 to S430. The operating method 40 of generating the capability information of the user equipment may be an example of operation S320 of FIG. 3, and consequently, repeated descriptions of operations S410 to S430 described with reference to FIG. 3 may be omitted for the sake of brevity.

Referring further to FIG. 4, in operation S410, the user equipment 12b may calculate a weight per CC. In some embodiments, the user equipment 12b may calculate the weight per CC, based on BC information. The weight per CC may be differently calculated according to a storage space by setting, to one (1), a weight for a CC that occupies the smallest storage space in the user equipment 12b, from among CCs.

For example, the BC information may include a first frequency band of FR1, a second frequency band of FR2, one CC corresponding to the first frequency band, and two CCs corresponding to the second frequency band. A storage space needed by the CC corresponding to the first frequency band may be eight (8) times a storage space by each of the CCs corresponding to the second frequency band. Based on the BC information, the user equipment 12b may calculate a weight per CC for one CC corresponding to the first frequency band as eight (8), and calculate a weight per CC for each of two CCs corresponding to the second frequency band as one (1). For example, regardless of the BC information, the user equipment 12b may calculate each of weights per CC as one (1).

In operation S420, the user equipment 12b may calculate the sum of maximum numbers of HARQ processes. In some embodiments, the user equipment 12b may calculate the sum of products of respective CC weights of the CCs included in the BC information and maximum numbers of HARQ processes supported by the user equipment 12b as the sum of the maximum numbers of HARQ processes.

For example, the BC information may include the first frequency band of FR1, the second frequency band of FR2, one CC corresponding to the first frequency band, and two CCs corresponding to the second frequency band. The maximum number of HARQ processes supported by the user equipment 12b may be 16 per CC, based on the first frequency band, and may be 32 per CC, based on the second frequency band. Accordingly, by using the weight per CC calculated in operation S410, the user equipment 12b may calculate the sum of the maximum numbers of HARQ processes. For example, each of the maximum numbers of HARQ processes supported by the user equipment 12b may be 32 per CC, and the user equipment 12b may calculate the sum of the maximum numbers of HARQ processes, based on the value of 32.

In operation S430, the user equipment 12b may generate a ratio R as capability information. In some embodiments, the user equipment 12b may generate, as capability information, a ratio R of the sum of the maximum numbers of HARQ processes, which is calculated in operation S420, to the sum of numbers of HARQ processes needed, by using the weight per CC calculated in operation S410.

FIG. 5 is a flowchart of an operating method 50 of a user equipment 12c, according to an embodiment.

Referring to FIG. 5, the operating method 50 of the user equipment 12c may include a plurality of operations S510 to S540. The base station 11c and the user equipment 12c of FIG. 5 may include and/or may be similar in many respects to the base stations 11, 11a, and 11b and the user equipment 12, 12a, and 12b, respectively, that are described with reference to FIGS. 1 to 3, and may include additional features not mentioned above. Furthermore, operation S510 of FIG. 5 may include and/or may be similar in many respects to the operation S210 described with reference to FIG. 2. Consequently, repeated descriptions of the base station 11c, the user equipment 12c, and operation S510 described with reference to FIGS. 1 to 3 may be omitted for the sake of brevity.

In operation S520, the user equipment 12c may generate a combination C corresponding to BC information as capability information. In some embodiments, the user equipment 12c may generate, as capability information, a combination C of the number of CCs, which may be supported by the user equipment 12c, based on the BC information, and a maximum number of HARQ processes for the CCs supported by the user equipment 12c. The combination C may be expressed in the form of a product of the number of CCs and a maximum number of HARQ processes per CC, and may be limited to a product of a maximum number of CCs and the maximum number of HARQ processes per CC.

For example, the BC information may include a first frequency band of FR1 and eight (8) CCs corresponding to the first frequency band. When the user equipment 12c supports eight (8) CCs for the first frequency band of FR1 to correspond to the BC information, the maximum number of HARQ processes per CC that may be supported by the user equipment 12c may be 16, and a combination of eight (8) CCs and 16 HARQ processes per CC may be expressed as a first combination 8CC×16HARQ. When the user equipment 12c supports four (4) CCs for the first frequency band of FR1 to correspond to the BC information, the maximum number of HARQ processes per CC that may be supported by the user equipment 12c may be 32, and a combination of four (4) CCs and 32 HARQ processes per CC may be expressed as a second combination 4CC×32HARQ. The user equipment 12c may generate combinations C including the first combination 8CC×16HARQ and the second combination 4CC×32HARQ as capability information.

In operation S530, the user equipment 12c may transmit the capability information to the base station 11c. In operation S540, the user equipment 12c may be allocated the number of HARQ processes per CC from the base station 11c. In some embodiments, the base station 11c may allocate the number of HARQ processes per CC to the user equipment 12c, based on the transmitted BC information and the received capability information.

For example, the BC information may include the first frequency band of FR1 and eight 8) CCs corresponding to the first frequency band, and the base station 11c may allocate four (4) CCs and 32 HARQ processes per CC, which may correspond to the first frequency band corresponding to the second combination 4CC×32HARQ, from among the combinations C including the first combination 8CC×16HARQ and the second combination 4CC×32HARQ, to the user equipment 12c.

The base station 11c may allocate the number of HARQ processes per CC to the user equipment 12c in a range of combinations C. When at least one of the numbers of HARQ processes per CC increases to 32, since the number of HARQ processes per CC is allocated in a range of received combinations C, additional memory may not be needed. Accordingly, a maximum number of HARQ processes per CC may be increased without increasing the complexity of the user equipment 12c.

In some embodiments, the user equipment 12c may perform an HARQ operation, based on the number of allocated HARQ processes per CC.

FIG. 6 is a flowchart of an operating method of a user equipment, according to an embodiment.

Referring to FIG. 6, an operating method 60 of a user equipment 12d may include a plurality of operations S610 to S640. A base station 11d and the user equipment 12d may be respectively examples of the base station 11 and the user equipment 12 of FIG. 1, and operation S610 may be the same as operation S210 of FIG. 2. In FIG. 6, the same descriptions as in FIGS. 1 and 2 are omitted. The base station 11d and the user equipment 12d of FIG. 6 may include and/or may be similar in many respects to the base stations 11, 11a, 11b, and 11c, and the user equipment 12, 12a, 12b, and 12c, respectively, that are described with reference to FIGS. 1 to 5, and may include additional features not mentioned above. Furthermore, operation S610 of FIG. 6 may include and/or may be similar in many respects to the operation S210 described with reference to FIG. 2. Consequently, repeated descriptions of the base station 11d, the user equipment 12d, and operation S610 described with reference to FIGS. 1 to 5 may be omitted for the sake of brevity.

In operation S620, the user equipment 12d may generate, as capability information, the number of HARQ processes per CC supported by the user equipment 12d. In some embodiments, the user equipment 12d may generate, as capability information, the number of CCs supported by the user equipment 12d, based on BC information, and a maximum number of HARQ processes for the CCs supported by the user equipment 12d.

For example, the BC information may include a first frequency band of FR1 and eight (8) CCs corresponding to the first frequency band. When the user equipment 12d supports four (4) CCs for the first frequency band of FR1 to correspond to the BC information, the maximum number of HARQ processes per CC that may be supported by the user equipment 12d may be 32, and the user equipment 12d may generate, as capability information, the four (4) CCs corresponding to the first frequency band and 32 HARQ processes per CC.

In operation S630, the user equipment 12d may transmit the capability information to the base station 11d. In operation S640, the user equipment 12d may be allocated the number of HARQ processes per CC from the base station 11d. In some embodiments, the base station 11d may allocate the number of HARQ processes per CC to the user equipment 12d, based on the transmitted BC information and the received capability information. For example, the base station 11d may allocate four (4) CCs and 32 HARQ processes per CC, which may correspond to the first frequency band, to the user equipment 12d.

The base station 11d may allocate the number of HARQ processes per CC to the user equipment 12c in a range of the capability information. When at least one of numbers of HARQ processes per CC increases to 32, since the number of HARQ processes per CC is allocated in a range of the received capability information, additional memory may not be needed. Accordingly, a maximum number of HARQ processes per CC may be increased without increasing the complexity of the user equipment 12d.

In some embodiments, the user equipment 12d may perform an HARQ operation, based on the number of allocated HARQ processes per CC.

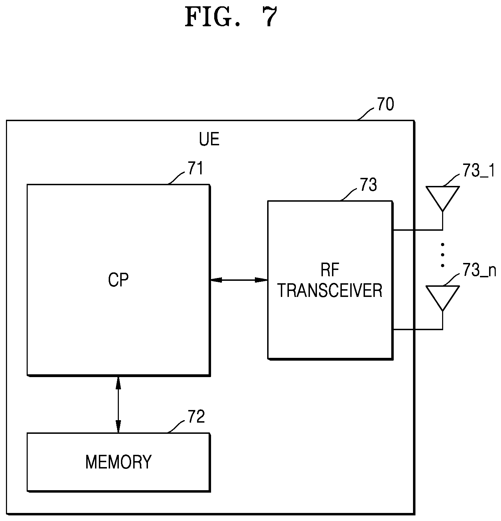

FIG. 7 is a block diagram of a user equipment, according to an embodiment. An embodied example of the user equipment 70 of FIG. 7 may be applied to the user equipment 12 of FIG. 1.

The user equipment 70 may include a communication processor 71, a memory 72, an RF transceiver 73, and a plurality of antennas (e.g., a first antenna 73_1 to an n-th antenna 73_n, where n is a positive integer greater than one (1)). The RF transceiver 73 may receive RF signals transmitted by the base station 11 of FIG. 1 through the plurality of antennas 73_1 to 73_n. The RF transceiver 73 may generate an intermediate frequency and/or baseband signals by down-converting the received RF signals. The RF transceiver 73 may up-convert an intermediate frequency or baseband signals, which may be output by the communication processor 71, and transmit RF signals to base station 11 of FIG. 1 through the plurality of antennas 73_1 to 73_n.

The communication processor 71 may generate data signals by filtering, decoding, and/or digitizing the intermediate frequency or the baseband signals, and receive data signals from the RF transceiver 73. The communication processor 71 may encode, multiplex, and/or analogize the received data signals. The communication processor 71 may additionally process the data signals, and/or execute programs and/or processes stored in the memory 72 to perform all control operations on the user equipment 70.

In some embodiments, the communication processor 71 may receive BC information from the base station 11 of FIG. 1, generate capability information, based on the received BC information and a maximum number of HARQ processes supported by the communication processor 71, and perform an HARQ operation, based on the number of processes per CC that are allocated to the user equipment 70 based on the capability information. The capability information generated by the communication processor 71 may include and/or may be similar in many respects to the capability information described with reference to FIGS. 1 to 6.

In some embodiments, the communication processor 71 may include a buffer that may be used to temporarily store pieces of information associated with the HARQ operation.

Although FIG. 7 depicts the communication processor 71 as a single processor, the present disclosure is not limited in this regard. For example, the communication processor 71 may include a plurality of communication processors and may also include processing circuitry. In an embodiment, the plurality of communication processors may, execute individually or collectively, instructions to perform at least one embodiment described herein.

The memory 72 may have an arbitrary structure configured to store data. For example, the memory 72 may include a volatile memory device, such as, but not limited to, dynamic random access memory (DRAM) and static RAM (SRAM), and/or a non-volatile memory device, such as, but not limited to, flash memory, or resistive RAM (RRAM). In some embodiments, the memory 72 may store pieces of information associated with the HARQ operation.

The communication processor 71 may generate capability information and perform the HARQ operation, based on the number of HARQ processes per CC that are allocated based on the capability information, and thus, additional storage space for storing pieces of information associated with the HARQ operation may not be needed. The additional storage space may refer to any one of the memory 72, a buffer included in the communication processor 71, or an external memory connected to the communication processor 71.

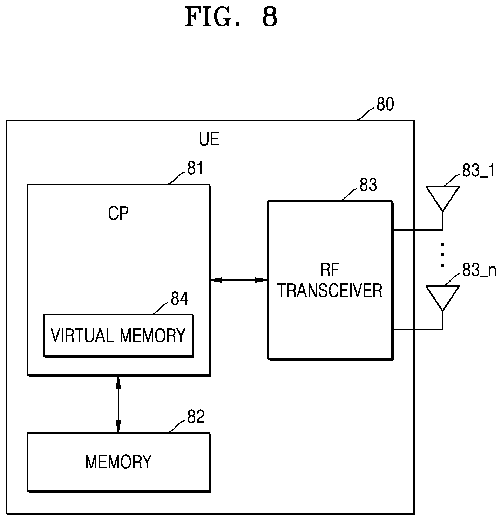

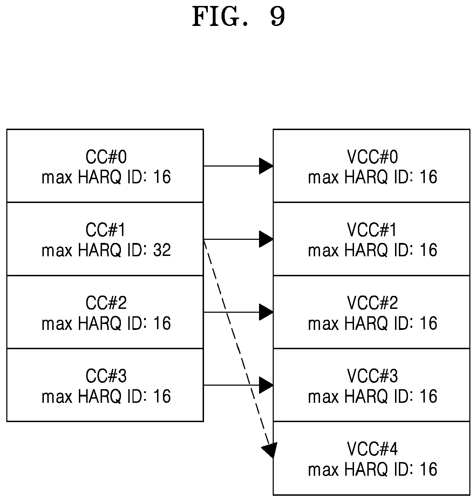

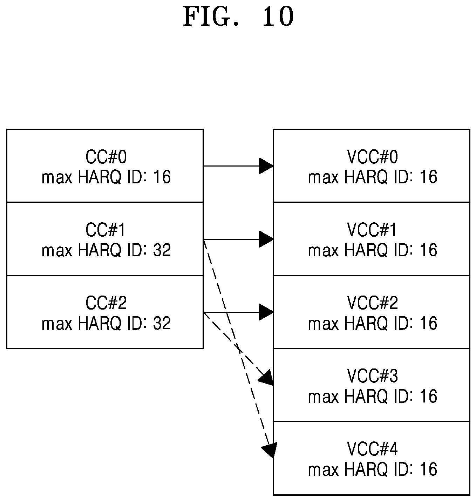

FIG. 8 is a block diagram of a user equipment 80, according to an embodiment. FIG. 9 is a block diagram of a virtual memory, according to an embodiment. FIG. 10 is a block diagram of a virtual memory, according to an embodiment. An embodied example of the user equipment 80 of FIG. 8 may be applied to the user equipment 12 of FIG. 1.

The user equipment 80 may include a communication processor 81, a memory 82, an RF transceiver 83, and a plurality of antennas (e.g., a first antenna 83_1 to an n-th antenna 83_n). The memory 82, the RF transceiver 83, and the plurality of antennas 83_1 to 83_n may include and/or may be similar in many respects to the memory 72, the RF transceiver 73, and the plurality of antennas 73_1 to 73_n, respectively, described above with reference to FIG. 7, and may include additional features not mentioned above. Consequently, repeated descriptions of these elements described above with reference to FIG. 7 may be omitted for the sake of brevity.

Hereinafter, it may be assumed that a virtual memory 84 has a storage space that may store a plurality of five (5) virtual CCs (e.g., a first virtual CC VCC#0, a second virtual CC VCC#1, a third virtual CC VCC#2, a fourth virtual CC VCC#3, and a fifth virtual CC VCC#4) and maximum numbers of 16 HARQ processes for each of the plurality of five (5) virtual CCs VCC#0 to VCC#4, and a storage space needed for each CC may be the same, however, the present disclosure is not limited thereto. For example, the storage space needed for each CC may vary depending on the number of antennas allocated.

The communication processor 81 may include the virtual memory 84 that may store a CC index and an HARQ identification (ID). In some embodiments, the communication processor 81 may allocate the CC index and the HARQ ID to the virtual memory 84, based on the number of HARQ processes per CC that are allocated based on capability information. The CC index may refer to an identification mark of each of allocated CCs, and HARQ ID may refer to an ID mark of each of HARQ processes corresponding to the same CC index.

For example, referring further to FIG. 9, each of CC#0 to CC#3 may refer to a CC index allocated to the communication processor 81, and each of VCC#0 to VCC#4 may refer to a virtual CC index allocated by the communication processor 81 in the virtual memory 84. A maximum number (max HARQ ID) of HARQ processes may refer to a maximum number of HARQ processes per CC. The communication processor 81 may be allocated a plurality of three (3) CCs (e.g., a first CC CC#0, a third CC CC#2, and a fourth CC CC#3), which may support the maximum numbers of 16 HARQ processes, and one CC (e.g., a second CC CC#1), which may support a maximum number of 32 HARQ processes, based on the capability information. In such a case, the fifth virtual CC VCC#4 may be a spare storage space, and thus, the communication processor 81 may allocate, to the fifth virtual CC VCC#4, 16 HARQ processes, out of the maximum number (max HARQ ID) of HARQ processes corresponding to the second CC CC#1.

As another example, referring to FIG. 10, each of the first to third CCs CC#0 to CC#2 may refer to a CC index allocated to the communication processor 81, and each of first to fifth virtual CCs VCC#0 to VCC#4 may refer to a virtual CC index allocated by the communication processor 81 in the virtual memory 84. The maximum number (max HARQ ID) of HARQ processes may refer to a maximum number of HARQ processes per CC. The communication processor 81 may be allocated one CC (e.g., the first CC CC#0), which may support the maximum number of 16 HARQ processes, and two CCs (e.g., the second CC CC#1 and the third CC CC#2), which may support maximum numbers of 32 HARQ processes, based on the capability information. In such a case, the fourth virtual CC VCC#3 and the fifth virtual CC VCC#4 may be spare storage spaces, and thus, the communication processor 81 may allocate, to the fifth virtual CC VCC#4, 16 HARQ processes, out of the maximum number (max HARQ ID) of HARQ processes corresponding to the second CC CC#1, and allocate, to the fourth virtual CC VCC#3, 16 HARQ processes, out of the maximum number (max HARQ ID) of HARQ processes corresponding to the third CC CC#2.

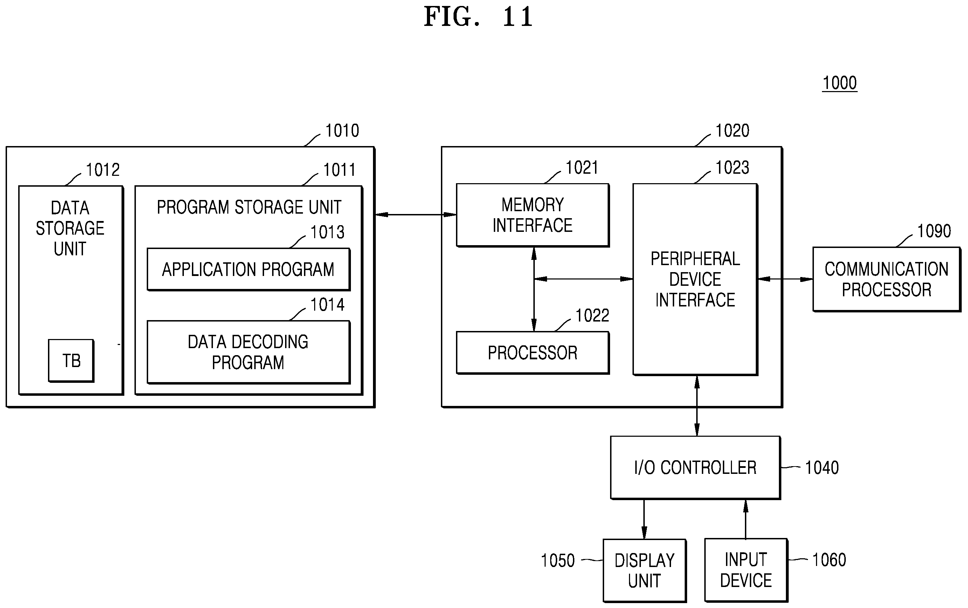

FIG. 11 is a block diagram of an electronic device 1000, according to an embodiment. The electronic device 1000 may be a user equipment, according to an embodiment. The electronic device 1000 may include and/or may be similar in many respects to the UE 12 described above with reference to FIG. 1, and may include additional features not mentioned above. Consequently, repeated descriptions of the electronic device 1000 described above with reference to FIG. 1 may be omitted for the sake of brevity.

Referring to FIG. 11, the electronic device 1000 may include a memory 1010, a processor unit 1020, an input/output (I/O) controller 1040, a display unit 1050, an input device 1060, and a communication processor 1090. Herein, the memory 1010 may be provided in plural.

The memory 1010 may include a program storage unit 1011 configured to store a program for controlling an operation of the electronic device 1000 and a data storage unit 1012 configured to store data generated during the execution of the program. The data storage unit 1012 may store data needed for operations of an application program 1013 and a data decoding program 1014 and/or may store data generated due to the operations of the application program 1013 and the data decoding program 1014.

The program storage unit 1011 may include the application program 1013 and the data decoding program 1014. The program included in the program storage unit 1011 may be and/or may include a set of instructions and may be expressed as an instruction set. The application program 1013 may include pieces of program code for performing various applications that operate in the electronic device 1000. That is, the application program 1013 may include pieces of code (or commands) related to various applications run by the processor 1022.

The electronic device 1000 may include the communication processor 1090 that configured to perform a communication function for voice communication and/or data communication. A peripheral device interface 1023 may control connection among the I/O controller 1040, the communication processor 1090, the processor 1022, and a memory interface 1021. The processor 1022 may control a plurality of base stations to provide the services corresponding thereto by using at least one software program. That is, the processor 1022 may execute at least one program stored in the memory 1010 and provide services corresponding to the at least one program.

The processor 1022 may receive BC information from the base station 11 of FIG. 1, generate capability information, based on the received BC information and a maximum number of HARQ processes supported by the processor 1022, and perform an HARQ operation, based on the number of processes per CC that are allocated to the processor 1022, based on the capability information. The capability information generated by the processor 1022 may include and/or may be similar in many respects to the capability information described with reference to FIGS. 1 to 9. Consequently, repeated descriptions of the capability information described above with reference to FIGS. 1 to 9 may be omitted for the sake of brevity.

The I/O controller 1040 may provide an interface between an I/O device, such as, but not limited to, the display unit 1050 and the input device 1060, and the peripheral device interface 1023. The display unit 1050 may display status information, input text, moving pictures, and/or still pictures and/or images. For example, the display unit 1050 may display application program information as driven by the processor 1022.

The input device 1060 may provide input data generated by selection of the electronic device 1000 to the processor unit 1020 through the I/O controller 1040. For example, the input device 1060 may include a keypad including at least one hardware button and/or a touch pad configured to detect touch information. The input device 1060 may provide touch information, such as, but not limited to, touch, touch movement, and/or touch release that may be detected via the touch pad, to the processor 1022 through the I/O controller 1040.

The number and arrangement of components of the electronic device 1000 shown in FIG. 11 are provided as an example. In practice, there may be additional components, fewer components, different components, or differently arranged components than those shown in FIG. 11. Furthermore, two or more components shown in FIG. 11 may be implemented within a single component, or a single component shown in FIG. 11 may be implemented as multiple, distributed components. Alternatively or additionally, a set of (one or more) components shown in FIG. 11 may be integrated with each other, and/or may be implemented as an integrated circuit, as software, and/or a combination of circuits and software.

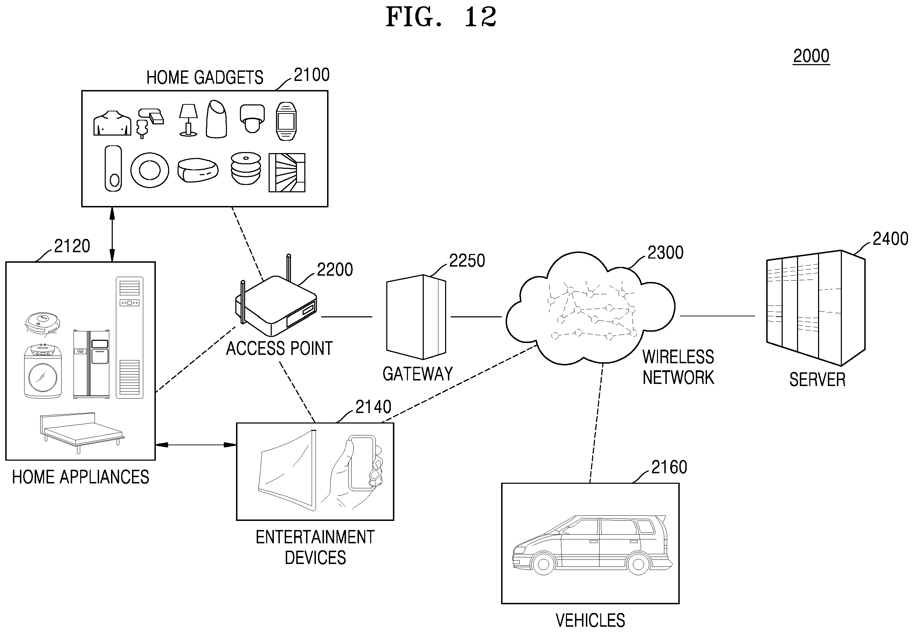

FIG. 12 is a conceptual diagram of an Internet of Things (IoT) network system 2000, according to an embodiment.

Referring to FIG. 12, the IoT network system 2000 may include a plurality of IoT devices (e.g., home gadgets 2100, home appliances 2120, entertainment devices 2140, and vehicles 2160), an AP 2200, a gateway 2250, a wireless network 2300, and a server 2400. An IoT network may refer to a network between things using wired and/or wireless communication.

Each of the IoT devices (e.g., the home gadgets 2100, the home appliances 2120, the entertainment devices 2140, and the vehicles 2160) may form a group according to the characteristics thereof. For example, the IoT devices may be grouped into a home gadget group 2100, a home appliance/furniture group 2120, an entertainment group 2140, or a vehicle group 2160. A plurality of IoT devices (e.g., the home gadgets 2100, the home appliances 2120, and the entertainment devices 2140) may be connected to a communication network and/or another IoT device through the AP 2200. The AP 2200 may be embedded in one IoT device. The gateway 2250 may change a protocol such that the AP 2200 may be connected to an external wireless network. The plurality of IoT devices (e.g., the home gadgets 2100, the home appliances 2120, and the entertainment devices 2140) may be connected to an external communication network through the gateway 2250. The wireless network 2300 may include the Internet and/or a public network. A plurality of IoT devices (e.g., the home gadgets 2100, the home appliances 2120, the entertainment devices 2140, and the vehicles 2160) may be connected to the server 2400, which may provide a predetermined service, through the wireless network 2300, and a user may use the service through at least one of the plurality of IoT devices (e.g., the home gadgets 2100, the home appliances 2120, the entertainment devices 2140, and the vehicles 2160).

Each of the plurality of IoT devices 2100 to 2160 may receive BC information from the base station 11 of FIG. 1. Each of the plurality of IoT devices 2100 to 2160 may generate capability information, based on the received BC information and a maximum number of HARQ processes supported by each of the plurality of IoT devices 2100 to 2160. Each of the plurality of IoT devices 2100 to 2160 may perform an HARQ operation, based on the number of processes per CC, which may be allocated to the corresponding one of the plurality of IoT devices 2100 to 2160, based on the capability information. The capability information generated by each of the plurality of IoT devices 2100 to 2160 may include and/or may be similar in many respects to the capability information described with reference to FIGS. 1 to 9. Consequently, repeated descriptions of the capability information described above with reference to FIGS. 1 to 9 may be omitted for the sake of brevity.

While the present disclosure has been particularly shown and described with reference to embodiments thereof, it is to be understood that various changes in form and details may be made therein without departing from the scope of the following claims.

## Claims

1. An operating method of a user equipment for performing wireless communication with a base station, the operating method comprising:
receiving, from the base station, band combination (BC) information comprising at least one frequency band and at least one carrier component (CC) corresponding to the at least one frequency band;
generating capability information, based on the BC information and maximum numbers of Hybrid Automatic Repeat reQuest (HARQ) processes supported by the user equipment for the at least one CC;
transmitting, to the base station, the capability information;
receiving, from the base station, an allocated number of HARQ processes allocated to the user equipment for each CC of the at least one CC, based on the capability information; and
performing a HARQ operation, based on the allocated number of HARQ processes.

2. The operating method of claim 1, wherein the generating of the capability information comprises:
generating, as the capability information, a sum of the maximum numbers of HARQ processes supported by the user equipment for the at least one CC.

3. The operating method of claim 1, wherein the BC information further comprises a maximum number of HARQ processes corresponding to each CC of the at least one CC,
wherein the generating of the capability information comprises:
calculating a sum of the maximum numbers of HARQ processes supported by the user equipment for the at least one CC; and
calculating, as the capability information, a ratio of the sum of the maximum numbers of HARQ processes supported by the user equipment for the at least one CC to a sum of the maximum number of HARQ processes corresponding to the at least one CC.

4. The operating method of claim 3, wherein the capability information further comprises a weight corresponding to each CC of the at least one CC.

5. The operating method of claim 4, wherein the calculating of the sum of the maximum numbers of HARQ processes supported by the user equipment for the at least one CC comprises:
calculating a sum of products of the weight corresponding to each CC of the at least one CC and the maximum numbers of HARQ processes supported by the user equipment as the sum of the maximum numbers of HARQ processes supported by the user equipment for the at least one CC.

6. The operating method of claim 1, wherein the generating of the capability information comprises:
generating, as the capability information, combinations of allocated numbers of HARQ processes of the at least one CC supported by the user equipment for the at least one frequency band and the maximum numbers of HARQ processes supported by the user equipment for the at least one CC.

7. The operating method of claim 1, wherein the generating of the capability information comprises:
generating, as the capability information, a number of HARQ processes supported by the user equipment for each CC of the at least one CC, based on the BC information.

8. The operating method of any preceding claim, wherein at least one of the maximum numbers of HARQ processes supported by the user equipment is 32.

9. The operating method of claim 8, wherein at least one of the maximum numbers of HARQ processes supported by the user equipment is less than or equal to 16.

10. The operating method of any preceding claim, wherein the performing of the HARQ operation, based the allocated number of HARQ processes, comprises:
allocating, to a virtual memory, a CC index and HARQ identification (ID), based on the allocated number of HARQ processes; and
performing the HARQ operation by using the virtual memory.

11. The operating method of any preceding claim, wherein the receiving of the BC information comprises:
receiving, from the base station, the BC information via radio resource control (RRC) signaling.

12. A user equipment configured to perform wireless communication with a base station, the user equipment comprising:
a plurality of antennas;
one or more communication processors comprising processing circuitry; and
a memory storing instructions,
wherein the instructions, when executed by the one or more communication processors individually or collectively, cause the user equipment to:
receive, from the base station, band combination (BC) information comprising at least one frequency band and at least one carrier component (CC) corresponding to the at least one frequency band;
generate capability information, based on the BC information and maximum numbers of Hybrid Automatic Repeat reQuest (HARQ) processes supported by the user equipment for the at least one CC; and
perform a HARQ operation, based on allocated numbers of HARQ processes for each CC of the at least one CC, the allocated numbers of HARQ processes being allocated by the user equipment based on the capability information.

13. The user equipment of claim 12, wherein the instructions, when executed by the one or more communication processors individually or collectively, further cause the user equipment to:
generate, as the capability information, a sum of the maximum numbers of HARQ processes supported by the user equipment for the at least one CC.

14. The user equipment of claim 12, wherein the instructions, when executed by the one or more communication processors individually or collectively, further cause the user equipment to:
generate, as the capability information, a ratio of the sum of the maximum numbers of HARQ processes supported by the user equipment for the at least one CC to a sum of the maximum numbers of HARQ processes corresponding to the at least one CC.

15. The user equipment of claim 12, wherein the instructions, when executed by the one or more communication processors individually or collectively, further cause the user equipment to:
generate, as the capability information, combinations of the allocated numbers of HARQ processes of the at least one CC supported by the user equipment for the at least one frequency band and the maximum numbers of HARQ processes supported by the user equipment for the at least one CC.
